# EUROPEAN PATENT SPECIFICATION

(11) **EP 3 708 402 B1**
(45) Date of publication and mention of the grant of the patent: **26.11.2025**
(21) Application number: 18873805.8
(22) Date of filing: 01.02.2018
(51) Int. Cl.: B60L 53/12, B60L 53/14, B60L 53/30, B60L 53/65, B60L 53/66, B60L 53/80, B60L 53/124

(54) **VEHICLE BATTERY SAFE OPERATION METHOD AND SYSTEM, PLATFORM, CONTROLLER, AND STORAGE MEDIUM**
VERFAHREN UND SYSTEM ZUM SICHEREN BETRIEB EINER FAHRZEUGBATTERIE, PLATTFORM, STEUERUNG UND SPEICHERMEDIUM
PROCÉDÉ ET SYSTÈME DE FONCTIONNEMENT SÛR DE BATTERIE DE VÉHICULE, PLATEFORME, DISPOSITIF DE COMMANDE ET SUPPORT DE STOCKAGE

(30) Priority: 06.11.2017 CN 201711077842
(43) Date of publication of application: 16.09.2020
(73) Proprietor: NIO (Anhui) Holding Co., Ltd., Hefei City, Anhui Province (CN)
(72) Inventor: LI, Nan, Anting, Jiading, Shangai (CN); TIAN, Xiaotao, Anting, Jiading, Shangai (CN); DING, Xikun, Anting, Jiading, Shangai (CN); MA, Yongyue, Anting, Jiading, Shangai (CN); BENGTSSON,Jan, Anting, Jiading, Shangai (CN)
(74) Representative: Vossius & Partner Patentanwälte Rechtsanwälte mbB
(86) International application number: PCT/CN2018/074978
(87) International publication number: WO 2019/085308

(56) References cited:
- WO-A1-2013/137182
- WO-A1-2013/144958
- WO-A1-98/21132
- CN-A- 104 519 488
- CN-A- 104 617 630
- CN-A- 105 437 998
- CN-A- 105 818 703
- CN-A- 105 818 703
- CN-A- 106 882 066
- CN-A- 106 965 687
- US-A1- 2016 254 697

## Description

### Technical Field

The invention relates to the technical field of vehicles, and in particular to a safe onboard battery operating method and system based on a battery operation platform, and a battery operation platform, a controller and a storage medium.

### Background Art

With the progress of science and technology and the development of society, various types of new energy vehicles such as electric vehicles and hybrid electric vehicles are increasingly widely used. With regard to these novel vehicles, technologies involving fast battery swapping and the like have increasingly become a focus and research topic in this field. However, such fast battery swapping technologies in the prior art still have various problems, such as a complicated practical operation process, imperfect operation management, and lack of safety. Therefore, there is a need for adequate research against existing problems or drawbacks, including those mentioned above, in order to make improvement.

CN 105 818 703 A relates to a charging pile control system which comprises at least one video monitoring device and a multifunctional charging pile. The video monitoring device is configured for acquiring image or video data within a monitoring range, analyzing the acquired image or video data and sending the analyzed image or video data to the multifunctional charging pile, wherein the monitoring range covers at least one parking place and the surrounding region of the parking place. The multifunctional charging pile is configured for receiving the image or video data sent by the video monitoring device, analyzing the position of an electric vehicle, relative to an empty parking place in the parking places, entering and exiting out of the monitoring range according to the image or video data and controlling the electric vehicle to be automatically parked.

WO 2013/144958 A1 relates to a battery switch station (BSS) including: a service lane for moving a vehicle through one or more service posts of the BSS, operative modules for servicing the vehicle while on the lane, a detection system adapted to detect one or more safety hazards along the lane, and a control system connected to the detection system and to one or more of the operative modules. The control system is configured and operable to be responsive to detection of one or more safety hazards for controlling operation of the one or more operative modules of the BSS by selectively disrupting or actuating normal operation of at least one of the operative modules.

US 2016/0254697 A1 discloses a non-contact power supply control system which includes: an electric transmission pad connected to a power source unit; a control unit controlling current supply to the electric transmission pad; a living body detecting means detecting a living body present around the electric transmission pad; a power receiving pad magnetically coupled to the electric transmission pad to excite power, when current is supplied from the power source unit to the electric transmission pad; and a power storage unit storing power excited by the power receiving pad.

### Summary of the Invention

In view of this, the invention provides a safe onboard battery operating method and system based on a battery operation platform, and a battery operation platform, a controller and a storage medium, so as to effectively solve the above problems and problems in other aspects in the prior art.

The present invention is defined by the features of the independent claims. Further preferred embodiments of the present invention are defined in the dependent claims. In particular, according to a first aspect of the invention, a safe onboard battery operating method based on a battery operation platform is provided, the method comprising the steps of:
A. starting the running of the battery operation platform;
B. performing a first operation verification, which comprises:
   sending operation information to the battery operation platform, the operation information comprising at least information about a current onboard battery operation and permission information about an operator, for determining whether a requested operation to the onboard battery meets a preset condition; and
   if the operation information meets the preset condition, opening an entrance of the battery operation platform to allow a vehicle, which carries an onboard battery to be operated, to move in, otherwise executing step E;
C. performing a second operation verification, which comprises:
   detecting whether the vehicle has already been safely parked within a preset region of the battery operation platform; and
   detecting whether an operator has already been within a preset safe region; and
   if the two detections in step C are both passed, performing a corresponding operation on the onboard battery according to the information about the current onboard battery operation, otherwise executing step E;
D. performing a third operation verification, which comprises:
   after the corresponding operation on the onboard battery has been completed, detecting whether the vehicle has already safely moved away from the battery operation platform; and
   detecting whether the operator has already been within the preset safe region; and
   if the two detections in step D are both passed, closing an exit of the battery operation platform, otherwise executing step E; and
E. performing an abnormality processing operation.

In the safe onboard battery operating method based on a battery operation platform according to the invention, optionally, whether the vehicle has already been safely parked within a preset region of the battery operation platform in step C, and/or whether the vehicle has already safely moved away from the battery operation platform in step D are/is confirmed by detecting the position of the vehicle by means of a detection apparatus connected to the battery operation platform.

In the safe onboard battery operating method based on a battery operation platform according to the invention, optionally, whether the vehicle has already been safely parked within a preset region of the battery operation platform in step C, and/or whether the vehicle has already safely moved away from the battery operation platform in step D are/is confirmed through information interaction between the vehicle and the battery operation platform.

In the safe onboard battery operating method based on a battery operation platform according to the invention, optionally, whether the operator has already been within the preset safe region in step C and/or step D is confirmed by detecting the position of the operator by means of a detection apparatus connected to the battery operation platform.

In the safe onboard battery operating method based on a battery operation platform according to the invention, optionally, whether the operator has already been within the preset safe region in step C and/or step D is confirmed through manual information interaction with the battery operation platform.

In the safe onboard battery operating method based on a battery operation platform according to the invention, optionally, the performing the corresponding operation on the onboard battery in step C comprises replacing the onboard battery, charging the onboard battery and maintaining the onboard battery.

In the safe onboard battery operating method based on a battery operation platform according to the invention, optionally, the abnormality processing operation in step E comprises:
alarming;
sending abnormality information to the battery operation platform, the abnormality information comprising at least part of the operation information, time of abnormality and place of abnormality; and/or
restarting the running of the battery operation platform, or stopping the running of the battery operation platform.

In the safe onboard battery operating method based on a battery operation platform according to the invention, optionally, at least part of the
operation information is sent to the battery operation platform through interaction between the vehicle and the battery operation platform.

In the safe onboard battery operating method based on a battery operation platform according to the invention, optionally, the battery operation platform is connected to a remote system, which is used for verifying whether the operation information meets the preset condition.

In the safe onboard battery operating method based on a battery operation platform according to the invention, optionally, the battery operation platform comprises a battery charging and swapping station.

Moreover, according to a second aspect of the invention, a safe onboard battery operating system is further provided, the system comprising a first operation verification unit, a second operation verification unit, a third operation verification unit and a fourth unit, wherein
the first operation verification unit is configured to: after the running of the battery operation platform is started, verify operation information sent to the battery operation platform, the operation information comprising at least information about a current onboard battery operation and permission information about an operator, for determining whether a requested operation to the onboard battery meets a preset condition; and when the operation information meets the preset condition, open an entrance of the battery operation platform to allow a vehicle, which carries an onboard battery to be operated, to move in, otherwise run the fourth unit;
the second operation verification unit is configured to: detect whether the vehicle has already been safely parked within a preset region of the battery operation platform; and detect whether the operator has already been within a preset safe region; and if the two detections are both passed, perform a corresponding operation on the onboard battery according to the information about the current onboard battery operation, otherwise run the fourth unit;
the third operation verification unit is configured to: after the corresponding operation on the onboard battery has been completed, detect whether the vehicle has already safely moved away from the battery operation platform; and detect whether the operator has already been within the preset safe region; and if the two detections are both passed, close an exit of the battery operation platform, otherwise run the fourth unit; and
the fourth unit is configured to perform an abnormality processing operation.

In the safe onboard battery operating system based on a battery operation platform according to the invention, optionally, the safe onboard battery operating system further comprises a detection apparatus connected to the battery operation platform, which is configured to detect the position of the vehicle to confirm whether the vehicle has already been safely parked within a preset region of the battery operation platform, whether the vehicle has already safely moved away from the battery operation platform, and/or whether the operator has already been within the preset safe region.

In the safe onboard battery operating system based on a battery operation platform according to the invention, optionally, the safe onboard battery operating system further comprises an information interaction unit, which is configured to perform information interaction between the vehicle and the battery operation platform to confirm whether the vehicle has already been safely parked within a preset region of the battery operation platform, and/or whether the vehicle has already safely moved away from the battery operation platform.

In the safe onboard battery operating system based on a battery operation platform according to the invention, optionally, the safe onboard battery operating system further comprises a manual information interaction unit configured to perform information interaction with the battery operation platform to confirm whether the operator has already been within the preset safe region.

In the safe onboard battery operating system based on a battery operation platform according to the invention, optionally, the corresponding operation comprises replacing the onboard battery, charging the onboard battery and maintaining the onboard battery.

In the safe onboard battery operating system based on a battery operation platform according to the invention, optionally, the abnormality processing operation comprises:
alarming;
sending abnormality information to the battery operation platform, the abnormality information comprising at least part of the operation information, time of abnormality and place of abnormality; and/or
restarting the running of the battery operation platform, or stopping the running of the battery operation platform.

In the safe onboard battery operating system based on a battery operation platform according to the invention, optionally, the information interaction unit is configured to send at least part of the operation information to the battery operation platform.

In the safe onboard battery operating system based on a battery operation platform according to the invention, optionally, the battery operation platform is connected to a remote system, which is used for verifying whether the operation information meets the preset condition.

In the safe onboard battery operating system based on a battery operation platform according to the invention, optionally, the battery operation platform comprises a battery charging and swapping station.

Furthermore, according a third aspect of the invention, a battery operation platform is further provided, the platform comprising the safe onboard battery operating system as described in any one of the above.

In addition, according to a fourth aspect of the invention, a controller is further provided, the controller comprising a processor and a memory which is used for storing instructions, wherein when the instructions are executed, the processor implements the safe onboard battery operating method based on a battery operation platform as described in any one of the above.

Additionally, according to a fifth aspect of the invention, a storage medium is further provided for storing instructions that, when executed, implement the safe onboard battery operating method based on a battery operation platform as described in any one of the above.

Based on a design concept completely different from the prior art, the invention innovatively provides a safe onboard battery operating method based on a battery operation platform, which focuses on the operability, simpleness and convenience, and safety of a vehicle, a device and a person at the same time, and in particular provides full guarantee for the safety of an operator, which has long been ignored in the industry, and not only the complete closed-loop supervision and management for the vehicle, the device and the person are implemented by means of multiple authentication, but also the operative safety, reliability and convenience of the entire system can be fully enhanced, and also the corresponding operation flow with regard to the onboard battery is driven to be more standardized, simple, and efficient. Applying the technical solution of the invention has significant positive meanings for improving the existing operations such as charging, battery swapping or maintenance, on the onboard battery.

### Brief Description of the Drawings

The technical solution of the invention will be further described in detail below with reference to accompanying drawings and embodiments. However, it should be understood that these accompanying drawings are designed for the purpose of illustration only and therefore are not intended to limit the scope of the invention. Moreover, unless indicated specifically, these drawings are merely intended to describe the structure construction or step flow described herein conceptually.
Fig. 1 is a schematic diagram of a stereoscopic structure of an embodiment of a battery operation platform according to the invention, wherein a vehicle which has already moved in the battery operation platform is displayed at the same time.
Fig. 2 is a schematic flow chart of an embodiment of a safe onboard battery operating method based on a battery operation platform according to the invention.
Fig. 3 is a schematic composition diagram of an embodiment of a safe onboard battery operating system based on a battery operation platform according to the invention.

### Detailed Description of Embodiments

Firstly, it needs to be noted that the principles, steps, structure composition, characteristics and advantages, etc., of a safe onboard battery operating method and a safe onboard battery operating system based on a battery operation platform, and the battery operation platform, a controller and a storage medium of the invention will be specifically described by way of example; however, all the description is merely illustrative and should not be understood to form any limitation to the invention.

In addition, some embodiments according to the invention are described herein, wherein the subject-matter of the invention is defined in the independent claims. Further preferred embodiments of the present invention are defined in the dependent claims.

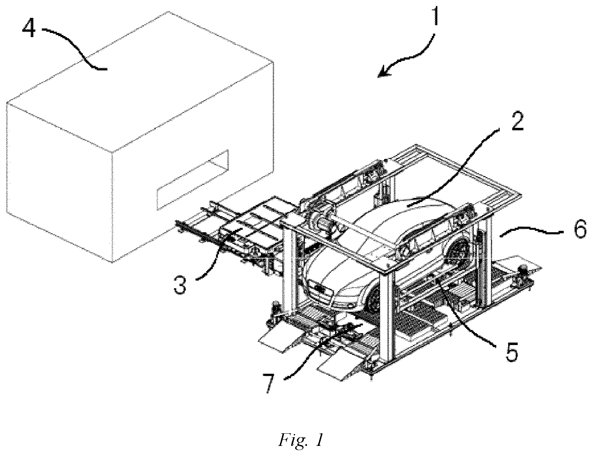

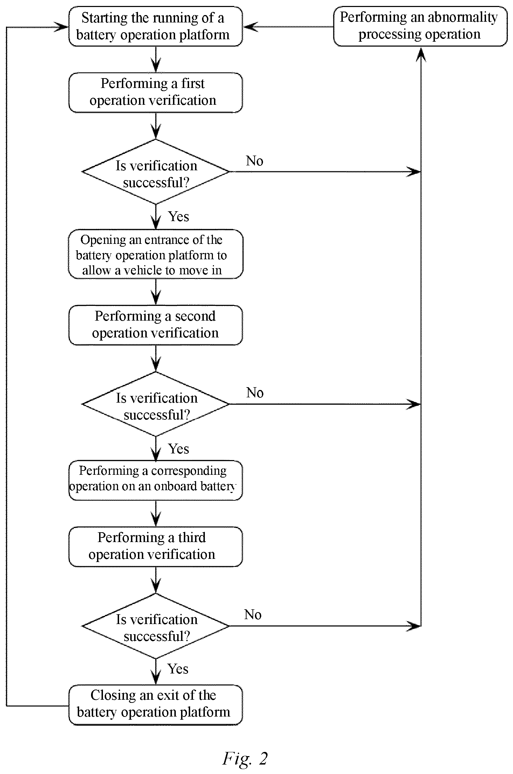

A basic stereoscopic structure of an embodiment of a battery operation platform according to the invention is only roughly illustrated schematically in Fig. 1, and a vehicle which has already moved in the battery operation platform is displayed at the same time. In addition, a basic flow chart of an embodiment of a safe onboard battery operating method based on a battery operation platform according to the invention is given in Fig. 2. As shown in these drawings above, the invention will be described in detail below.

In the given embodiment of the safe onboard battery operating method, the method performs corresponding operations on an onboard battery carried on a vehicle 2, based on a battery operation platform 1. Specifically, firstly the running of the battery operation platform 1 is started, so as to enable the battery operation platform to enter an operating state. Generally, when the running of such a battery operation platform 1 is started, some preset self-checking programs may be executed according to practical application requirements, so as to be able to discover and exclude potential device faults and possible problems before entering a normal standby operating state, thereby ensuring the safety performance of the running of the platform.

When driving near the battery operation platform 1, the vehicle 2 requests to move in the battery operation platform 1, so that when a corresponding operation is to be performed on the onboard battery carried on the vehicle 2, a first operation verification must be performed first as shown in Fig. 2. Such a first operation verification comprises sending information about the current operation to the battery operation platform 1 for verification, so as to determine whether the corresponding operation requested this time meets a preset condition on this basis. By way of example, such operation information comprises but is not limited to information about a current onboard battery operation (such as a specific operation item (charging the onboard battery, replacing the onboard battery or maintaining the onboard battery, etc.,)) and permission information about an operator (such as the legality of an operation permission, a permission level, etc.), for ensuring the safety to perform a corresponding operation on the onboard battery based on the battery operation platform according to the method of the invention.

As shown in Fig. 2, when the above first operation verification is passed normally, an entrance 6 of the battery operation platform 1 will be opened to allow the vehicle 2 to move in the battery operation platform 1 for subsequent operations.

Certainly, when the first operation verification has failed, for example, this may be attributed to the operation information about the onboard battery requested this time being checked to be not meeting the preset condition, or may also be attributed to a corresponding permission of the operator not matching the current onboard battery operation, and at this time, the case where the first operation verification failed can be regarded as an abnormality case for corresponding processing.

For example, in some optional embodiments, such an abnormality processing operation may use an alarming method, which may use any one or more appropriate forms such as sound, light, and electric, to remind a relevant person to pay attention and process in time.

In addition, in other optional embodiments, the invention also allows sending abnormality information happened this time to the battery operation platform 1, wherein the abnormality information may comprise at least part of the operation information, time of abnormality, place of abnormality, etc., so that analysis and processing can be performed in the battery operation platform 1 in time, or the above abnormality information may also be stored locally and/or uploaded to a remote system for finer and more professional analysis and processing when convenient, so that it is possible to be helpful for further optimizing and improving a relevant device and apparatus, an operation management flow, etc.

Additionally, in some other optional embodiments, the abnormality processing operation may be restarting the running of the battery operation platform 1, or directly turning off the battery operation platform 1 to stop the running thereof, so that there will be sufficient time to discover and eliminate the reason which results in the happening of this abnormality condition.

Certainly, it needs to be noted that the means for abnormality processing operations in the invention is not limited to the above methods described by way of example or any combination thereof. For this, a variety of appropriate methods are completely allowed to be used in the invention to implement the abnormality processing operation discussed above.

Please continue to refer to the exemplary flow in Fig. 2, then a second operation verification will be performed, comprising: detecting whether the vehicle 2 has already been safely parked within a preset region 5 of the battery operation platform 1, and detecting whether an operator has already been within a preset safe region at the moment. That is to say, the above two items of operation verification need to be passed firstly in the invention to confirm that the vehicle, the device and the person are all in a normal and appropriate safe state at the moment, only then the following operation is allowed to be implemented, that is, performing a corresponding operation on an onboard battery according to information about a current onboard battery operation. For example, Fig. 1 exemplarily illustrates that, when an onboard battery which has drained is taken down from the vehicle 2, a fully charged onboard battery which is moved from a charging storage bin 4 of a battery pack will be transported to a place near the parking position of the vehicle 2 on the battery operation platform 1 via a transport device for battery replacing 3 in the battery operation platform 1, and then a battery swap operation requested this time is completed.

It can be understood that when the above second operation verification is performed, it is still possible that the operation verification cannot be passed. For this, corresponding processing may be performed with reference to the aforementioned abnormality processing operation, which will not be repeated herein.

Fig. 2 further shows the situation of processing a third operation verification which is performed subsequently. That is, after a corresponding operation on the onboard battery of the vehicle 2 has been completed, the vehicle 2 can drive out from an exit 7 of the battery operation platform 1, so as to leave the battery operation platform 1. At this time, according to the method of the invention, whether the vehicle 2 has already moved away safely from the battery operation platform 1 needs to be confirmed through detection, and whether the operator has already been within the preset safe region needs to be confirmed. Once the two items of detection are passed, it indicates that the current onboard battery operation has successfully completed, and thus the exit 7 of the battery operation platform 1 can be closed to finish the current onboard battery operation. At this time, according to actual conditions of the operating site, the battery operation platform 1 can be enabled to be in a standby running state so as to perform the next onboard battery operation request subsequently, or the battery operation platform 1 can also be turned off to stop the running thereof, waiting to receive a new onboard battery operation request, then the battery operation platform 1 is restarted again.

It is not difficult to understand that when the above third operation verification is performed, it is still possible that the operation verification cannot be passed. For this, corresponding processing may still be performed with reference to the abnormality processing operation which has been discussed in detail above, which will not be repeated herein.

As described above, in the method of the invention, whether the vehicle 2 has already been safely parked within the preset region 5 of the battery operation platform 1 and whether the vehicle 2 has already safely moved away from the battery operation platform 1 need to be detected, which may be implemented by any one or more appropriate means. For example, in some optional situations, one or more detection apparatuses (such as an infrared sensor, a camera apparatus, etc.) connected to the battery operation platform 1 can be provided, so that such detection apparatuses are used to detect the position of the vehicle 2 for confirmation. For another example, in some other optional situations, when the vehicle 2 is equipped with a corresponding communication interaction device or apparatus, information interaction can be performed between the vehicle 2 and the battery operation platform 1 to confirm the situation of the current position of the vehicle 2. In addition, if necessary, the invention also allows multiple detection and confirmation to be performed by more than two or multiple other means at the same time, so as to further enhance the safety and reliability of the safe onboard battery operating method. It needs to be noted that the design concept of the invention completely covers the safety protection for the vehicle, the operation platform device and the person, which implements completely closed-loop supervision and whole process management with regard to the above three aspects. In this regard, the invention particularly focuses on the personal safety problem of an operator, etc., involved when an onboard battery operation is performed, which is completely ignored in the prior art, solves long-term prejudice formed in the prior art, that is, applying the solution of the invention can comprehensively guarantee the systematic safety, particularly comprising personal safety, in a more standardized, simple and convenient and efficient manner.

As described above, in the method of the invention, with regard to detection and determination regarding whether the operator has already been within the preset safe region, the position of the operator can be confirmed by means of one or more detection apparatuses (such as an infrared sensor, a camera apparatus, etc.) connected to the battery operation platform 1. Certainly, such detection apparatuses may use a part or all of the above detection apparatus for detecting the position of the vehicle 2, and may also use another detection apparatus which is arranged separately. In addition, the detection and confirmation regarding whether the operator has already been within the preset safe region can also be implemented by means of manual information interaction by persons in the invention, and such a manual information interaction method can be performed in a wired or wireless communication manner, and the corresponding interaction apparatus or device may be a fixed terminal and may also be a handheld mobile device, which may possibly be operated for confirmation by the operator himself/herself, and may also be operated for confirmation by other working people in the operating site.

In addition, it should also be understood that in the method of the invention, the battery operation platform 1 may be connected to a remote system (such as a cloud server, etc.), so that the remote system can be used to verify whether the explained operation information meets a preset condition when required in practical usage. With regard to such a remote system, more complete and comprehensive data information may be stored and/or a more perfect and higher confidential level of verification application program may be running. Additionally, with regard to the operation information, when the vehicle 2 is equipped with a corresponding communication interaction device or apparatus, they are allowed to interact with the battery operation platform 1 in the invention, in order to send at least part of the operation information to the battery operation platform **1,** so that the method of the invention is simplified and more convenient, which is helpful to ensure the safety of the vehicle, the device and the person in the entire onboard battery operation process.

Additionally, according to another technical solution of the invention, a safe onboard battery operating system is further provided. The safe onboard battery operating system is configured such that, for example, any appropriate form of hardware, software or a combination thereof, etc., can be used to execute the safe onboard battery operating method based on a battery operation platform according to the invention, so as to be able to fully utilize these characteristics and advantages of the invention which are significantly superior to the prior art as described above, to comprehensively improve the safety guarantee capability for protecting the vehicle, the device and the person when an onboard battery operation is performed by three authentication operations.

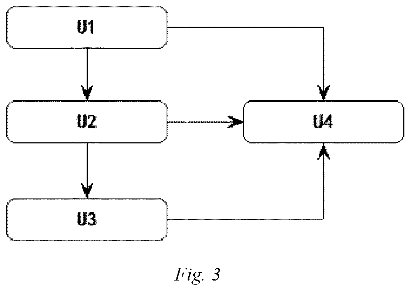

Specifically, as shown in Fig. 3, in the given embodiment of the safe onboard battery operating system, the system comprises a first operation verification unit U1, a second operation verification unit U2, a third operation verification unit U3 and a fourth unit U4, wherein the first operation verification unit U1 is configured to: after the running of the battery operation platform is started, verify operation information sent to the battery operation platform; and when the operation information meets a preset condition, open an entrance of the battery operation platform to allow a vehicle, which carries an onboard battery to be operated, to move in, otherwise, run the fourth unit;
the second operation verification unit U2 is configured to: detect whether the vehicle has already been safely parked within a preset region of the battery operation platform; and detect whether an operator has already been within a preset safe region; and if the two detections are both passed, perform a corresponding operation on the onboard battery according to the information about a current onboard battery operation, otherwise run the fourth unit;
the third operation verification unit U3 is configured to: after the corresponding operation on the onboard battery has been completed, detect whether the vehicle has already safely moved away from the battery operation platform; and detect whether the operator has already been within the preset safe region; and if the two detections are both passed, close an exit of the battery operation platform, otherwise run the fourth unit; and
the fourth unit U4 is configured to perform an abnormality processing operation.

As an example, in an optional condition, the safe onboard battery operating system according to the invention may further comprise a detection apparatus connected to the battery operation platform, which is configured to detect the position of the vehicle to confirm whether the vehicle has already been safely parked within a preset region of the battery operation platform, whether the vehicle has already safely moved away from the battery operation platform, and/or whether the operator has already been within the preset safe region.

In addition, in an optional condition, the safe onboard battery operating system according to the invention may further comprise an information interaction unit configured to perform information interaction between the vehicle and the battery operation platform to confirm whether the vehicle has already been safely parked within a preset region of the battery operation platform, and/or whether the vehicle has already safely moved away from the battery operation platform.

Additionally, in an optional condition, the safe onboard battery operating system according to the invention may further comprise a manual information interaction unit configured to perform information interaction with the battery operation platform to confirm whether the operator has already been within the preset safe region.

Many aspects, for example, the abnormality processing operation, performing information interaction between the vehicle or person with the battery operation platform, performing operation information verification via a remote system, performing a corresponding operation information on the onboard battery, etc., in the technical solution according to the invention have been exemplarily described in very detail above, and thus these aforementioned contents may be combined and referred to, and will not be repeated herein.

In addition, according to another technical solution of the invention, a battery operation platform is further provided. The battery operation platform comprises the safe onboard battery operating system provided and designed according to the invention, so as to perform corresponding operations on the onboard battery, and these operations comprise but are not limited to any possible operation items such as charging, replacing or maintaining the onboard battery (for example, taking down the onboard battery for detection, maintenance, refit, etc.). For example, Fig. 1 exemplarily shows a battery operation platform 1 which is specifically in the form of a battery charging and swapping station.

Additionally, the invention further provides a controller, which comprises a processor and a memory which is used for storing instructions, wherein when the instructions are executed, the processor implements, for example, the safe onboard battery operating method based on a battery operation platform according to the invention as exemplarily described above in connection with Fig. 2. In specific embodiments, the controller may be provided in the battery operation platform, and may also be provided in other devices which can implement the method and can implement the intention of the invention.

Finally, the invention further provides a storage medium for storing instructions that, when being executed, implement the safe onboard battery operating method based on a battery operation platform according to the invention as exemplarily described in conjunction with Fig. 2 above.

The safe onboard battery operating method and the safe onboard battery operating system based on a battery operation platform, the battery operation platform, the controller and the storage medium according to the invention are explained in detail above only by way of example, and these examples are merely used for describing the principles of the invention and the implementations thereof, rather than limiting the invention, and without departing from the scope of the claims, those skilled in the art may also make various variations and improvements. For example, in the given examples, in each of the cases where the first, the second or the third operation verification cannot be passed, an abnormality processing operation flow is executed; For another example, in the example in Fig. 1, the entrance 6 and the exit 7 of the battery operation platform 1 are both implemented by means of a flipper mechanism; however, the invention totally allows to use other structure forms, e.g., a gate machine. In addition, the technical term "onboard battery" used herein comprises but is not limited to a battery, a battery group, a battery pack, etc., for providing power for a vehicle.

## Claims

1. A safe onboard battery operating method based on a battery operation platform (1), the method comprising the steps of:
A. starting the running of the battery operation platform (1);
B. performing a first operation verification in a first operation verification unit (U1), which comprises:
sending operation information to the battery operation platform (1), the operation information relating to an operation on an onboard battery and comprising at least information about an operation to be made on the onboard battery and permission information about an operator; and
if the operation information meets a preset condition, opening an entrance (6) of the battery operation platform (1) to allow a vehicle (2), which carries an onboard battery to be operated, to move in, otherwise executing step E;
C. performing a second operation verification in a second operation verification unit (U2), which comprises:
detecting whether the vehicle (2) is safely parked within a preset region (5) of the battery operation platform (1); and
detecting whether an operator is within a preset safe region; and
if the two detections in step C are both passed, performing a corresponding operation on the onboard battery according to the information about the operation to be made on the onboard battery, otherwise executing step E;
D. performing a third operation verification in a third operation verification unit (U3), which comprises:
after the corresponding operation on the onboard battery has been completed, detecting whether the vehicle (2) has already safely moved away from the battery operation platform (1); and
detecting whether the operator is within the preset safe region; and
if the two detections in step D are both passed, closing an exit (7) of the battery operation platform (1), otherwise executing step E; and
E. in a fourth operation verification unit (U4), performing an abnormality processing operation.

2. The safe onboard battery operating method based on a battery operation platform (1) according to claim 1, **characterized in that** whether the vehicle (2) has already been safely parked within a preset region (5) of the battery operation platform (1) in step C, and/or whether the vehicle (2) has already safely moved away from the battery operation platform (1) in step D are/is confirmed by detecting the position of the vehicle by means of a detection apparatus connected to the battery operation platform (1).

3. The safe onboard battery operating method based on a battery operation platform (1) according to claim 1, **characterized in that** whether the vehicle (2) has already been safely parked within a preset region (5) of the battery operation platform (1) in step C, and/or whether the vehicle (2) has already safely moved away from the battery operation platform (1) in step D are/is confirmed through information interaction between the vehicle (2) and the battery operation platform (1).

4. The safe onboard battery operating method based on a battery operation platform (1) according to claim 1, **characterized in that** whether the operator has already been within the preset safe region in step C and/or step D is confirmed by detecting the position of the operator by means of a detection apparatus connected to the battery operation platform (1).

5. The safe onboard battery operating method based on a battery operation platform (1) according to claim 1, **characterized in that** whether the operator has already been within the preset safe region in step C and/or step D is confirmed through manual information interaction with the battery operation platform (1).

6. The safe onboard battery operating method based on a battery operation platform (1) according to claim 1, **characterized in that** performing the corresponding operation on the onboard battery in step C comprises replacing the onboard battery, charging the onboard battery and maintaining the onboard battery.

7. The safe onboard battery operating method based on a battery operation platform (1) according to claim 1, **characterized in that** the abnormality processing operation in step E comprises:
alarming;
sending abnormality information to the battery operation platform (1), the abnormality information comprising at least part of the operation information, time of abnormality and place of abnormality; and/or
restarting the running of the battery operation platform (1), or stopping the running of the battery operation platform (1).

8. The safe onboard battery operating method based on a battery operation platform (1) according to claim 1, **characterized in that** at least part of the operation information is sent to the battery operation platform (1) through interaction between the vehicle (2) and the battery operation platform (1).

9. The safe onboard battery operating method based on a battery operation platform (1) according to claim 1, **characterized in that** the battery operation platform (1)is connected to a remote system, which is used for verifying whether the operation information meets the preset condition.

10. The safe onboard battery operating method based on a battery operation platform (1) according to any one of claims 1 to 9, **characterized in that** the battery operation platform (1) comprises a battery charging and swapping station.

11. A safe onboard battery operating system based on a battery operation platform (1), **characterized by** comprising a first operation verification unit (U1), a second operation verification unit (U2), a third operation verification unit (U3) and a fourth unit (U4), wherein
the first operation verification unit (U1) is configured to: after the running of the battery operation platform (1) is started, verify operation information sent to the battery operation platform (1), the operation information relating to operations on an on-board battery and comprising at least information about an current operation to be made on the onboard battery based on the battery operation platform and permission information about an operator; and when the operation information meets a preset condition, open an entrance (6) of the battery operation platform (1) to allow a vehicle (2), which carries an onboard battery to be operated, to move in, otherwise run the fourth unit (U4);
the second operation verification unit (U2) is configured to: detect whether the vehicle (2) is safely parked within a preset region (5) of the battery operation platform (1); and detect whether the operator is within a preset safe region; and if the two detections are both passed, perform a corresponding operation on the onboard battery according to the information about the operation to be made on the onboard battery, otherwise run the fourth unit (U4);
the third operation verification unit (U3) is configured to: after the corresponding operation on the onboard battery has been completed, detect whether the vehicle (2) has already safely moved away from the battery operation platform (1); and detect whether the operator has already been within the preset safe region; and if the two detections are both passed, close an exit (7) of the battery operation platform (1), otherwise run the fourth unit (U4); and
the fourth unit (U4) is configured to perform an abnormality processing operation.

12. The safe onboard battery operating system based on a battery operation platform (1) according to claim 11, **characterized in that** the safe onboard battery operating system further comprises a detection apparatus connected to the battery operation platform (1), which is configured to detect the position of the vehicle (2) to confirm whether the vehicle (2) has already been safely parked within a preset region (5) of the battery operation platform (1), whether the vehicle (2) has already safely moved away from the battery operation platform (1), and/or whether the operator has already been within the preset safe region.

13. The safe onboard battery operating system based on a battery operation platform (1) according to claim 11, **characterized in that** the safe onboard battery operating system further comprises an information interaction unit, which is configured to perform information interaction between the vehicle (2) and the battery operation platform (1) to confirm whether the vehicle (2) has already been safely parked within a preset region (5) of the battery operation platform (1), and/or whether the vehicle (2) has already safely moved away from the battery operation platform (1).

14. The safe onboard battery operating system based on a battery operation platform (1) according to claim 11, 12 or 13, **characterized in that** the safe onboard battery operating system further comprises a manual information interaction unit configured to perform information interaction with the battery operation platform (1) to confirm whether the operator has already been within the preset safe region.

## Patentansprüche

1. Verfahren zum sicheren Arbeiten an einer bordeigenen Batterie, basierend auf einer Plattform (1) für Arbeitsvorgänge an Batterien, wobei das Verfahren die folgenden Schritte umfasst:
A. Starten des Betriebes der Plattform (1) für Arbeitsvorgänge an Batterien,
B. Durchführen einer ersten Arbeitsvorgangsverifizierung in einer ersten Einheit (U1) zum Verifizieren von Arbeitsvorgängen, was Folgendes umfasst:
Senden von Arbeitsvorgangsinformationen an die Plattform (1) für Arbeitsvorgänge an Batterien, wobei die Arbeitsvorgangsinformationen einen Arbeitsvorgang an einer bordeigenen Batterie betreffen und mindestens Informationen über einen Arbeitsvorgang, der an der bordeigenen Batterie vorzunehmen ist, und Zulassungsinformationen über einen Arbeiter umfassen, und
Öffnen einer Einfahrt (6) der Plattform (1) für Arbeitsvorgänge an Batterien, wenn die Arbeitsvorgangsinformationen eine voreingestellte Bedingung erfüllen, um einem Fahrzeug (2), das eine bordeigene Batterie mitführt, an der ein Arbeitsvorgang vorzunehmen ist, das Einfahren zu gestatten, sonst Ausführen von Schritt E,
C. Durchführen einer zweiten Arbeitsvorgangsverifizierung in einer zweiten Einheit (U2) zum Verifizieren von Arbeitsvorgängen, was Folgendes umfasst:
Erkennen, ob das Fahrzeug (2) sicher in einer voreingestellten Region (5) der Plattform (1) für Arbeitsvorgänge an Batterien geparkt ist, und
Erkennen, ob sich ein Arbeiter in einer voreingestellten sicheren Region befindet, und
Durchführen eines entsprechenden Arbeitsvorgangs an der bordeigenen Batterie gemäß den Informationen über den an der bordeigenen Batterie vorzunehmenden Arbeitsvorgang, wenn die zwei Erkennungen in Schritt C beide positiv ausfallen, sonst Ausführen von Schritt E,
D. Durchführen einer dritten Arbeitsvorgangsverifizierung in einer dritten Einheit (U3) zum Verifizieren von Arbeitsvorgängen, was Folgendes umfasst:
Erkennen, ob das Fahrzeug (2) bereits sicher von der Plattform (1) für Arbeitsvorgänge an Batterien gefahren ist, nachdem der entsprechende Arbeitsvorgang an der bordeigenen Batterie abgeschlossen wurde, und
Erkennen, ob sich der Arbeiter in der voreingestellten sicheren Region befindet, und Schließen eines Ausgangs (7) der Plattform (1) für Arbeitsvorgänge an Batterien, wenn die zwei Erkennungen in Schritt D beide positiv ausfallen, sonst Ausführen von Schritt E, und
E. Ausführen eines Anomalieverarbeitungsvorgangs in einer vierten Einheit (U4) zum Verifizieren von Arbeitsvorgängen.

2. Verfahren zum sicheren Arbeiten an einer bordeigenen Batterie, basierend auf einer Plattform (1) für Arbeitsvorgänge an Batterien, nach Anspruch 1, **dadurch gekennzeichnet, dass**, ob das Fahrzeug (2) in Schritt C bereits sicher in einer voreingestellten Region (5) der Plattform (1) für Arbeitsvorgänge an Batterien geparkt ist, und/oder ob das Fahrzeug (2) in Schritt D bereits sicher von der Plattform (1) für Arbeitsvorgänge an Batterien gefahren ist, durch Erkennen der Position des Fahrzeugs mittels einer Erkennungsvorrichtung, die mit der Plattform (1) für Arbeitsvorgänge an Batterien verbunden ist, rückgemeldet wird.

3. Verfahren zum sicheren Arbeiten an einer bordeigenen Batterie, basierend auf einer Plattform (1) für Arbeitsvorgänge an Batterien, nach Anspruch 1, **dadurch gekennzeichnet, dass**, ob das Fahrzeug (2) in Schritt C bereits sicher in einer voreingestellten Region (5) der Plattform (1) für Arbeitsvorgänge an Batterien geparkt ist, und/oder ob das Fahrzeug (2) in Schritt D bereits sicher von der Plattform (1) für Arbeitsvorgänge an Batterien gefahren ist, durch Informationsinteraktion zwischen dem Fahrzeug (2) und der Plattform (1) für Arbeitsvorgänge an Batterien rückgemeldet wird.

4. Verfahren zum sicheren Arbeiten an einer bordeigenen Batterie, basierend auf einer Plattform (1) für Arbeitsvorgänge an Batterien, nach Anspruch 1, **dadurch gekennzeichnet, dass**, ob sich der Arbeiter in Schritt C und/oder in Schritt D bereits in der voreingestellten sicheren Region befindet, durch Erkennen der Position des Arbeiters mittels einer Erkennungsvorrichtung, die mit der Plattform (1) für Arbeitsvorgänge an Batterien verbunden ist, rückgemeldet wird.

5. Verfahren zum sicheren Arbeiten an einer bordeigenen Batterie, basierend auf einer Plattform (1) für Arbeitsvorgänge an Batterien nach Anspruch 1, **dadurch gekennzeichnet, dass**, ob sich der Arbeiter in Schritt C und/oder in Schritt D bereits in der voreingestellten sicheren Region befindet, durch manuelle Informationsinteraktion mit der Plattform (1) für Arbeitsvorgänge an Batterien rückgemeldet wird.

6. Verfahren zum sicheren Arbeiten an einer bordeigenen Batterie, basierend auf einer Plattform (1) für Arbeitsvorgänge an Batterien, nach Anspruch 1, **dadurch gekennzeichnet, dass** das Durchführen des entsprechenden Arbeitsvorgangs an der bordeigenen Batterie in Schritt C das Austauschen der bordeigenen Batterie, das Laden der bordeigenen Batterie und das Warten der bordeigenen Batterie umfasst.

7. Verfahren zum sicheren Arbeiten an einer bordeigenen Batterie, basierend auf einer Plattform (1) für Arbeitsvorgänge an Batterien, nach Anspruch 1, **dadurch gekennzeichnet, dass** der Anomalieverarbeitungsvorgang in Schritt E Folgendes umfasst:
Alarmieren,
Senden von Anomalieinformationen an die Plattform (1) für Arbeitsvorgänge an Batterien, wobei die Anomalieinformationen mindestens einen Teil der Arbeitsvorgangsinformationen, den Zeitpunkt der Anomalie und den Ort der Anomalie umfassen, und/oder
Neustarten des Betriebes der Plattform (1) für Arbeitsvorgänge an Batterien oder Stoppen des Betriebes der Plattform (1) für Arbeitsvorgänge an Batterien.

8. Verfahren zum sicheren Arbeiten an einer bordeigenen Batterie, basierend auf einer Plattform (1) für Arbeitsvorgänge an Batterien, nach Anspruch 1, **dadurch gekennzeichnet, dass** mindestens ein Teil der Arbeitsvorgangsinformationen durch eine Interaktion zwischen dem Fahrzeug (2) und der Plattform (1) für Arbeitsvorgänge an Batterien an die Plattform (1) für Arbeitsvorgänge an Batterien gesendet wird.

9. Verfahren zum sicheren Arbeiten an einer bordeigenen Batterie, basierend auf einer Plattform (1) für Arbeitsvorgänge an Batterien, nach Anspruch 1, **dadurch gekennzeichnet, dass** die Plattform (1) für Arbeitsvorgänge an Batterien mit einem Fernsystem verbunden ist, das zum Verifizieren, ob die Arbeitsvorgangsinformationen die voreingestellte Bedingung erfüllen, verwendet wird.

10. Verfahren zum sicheren Arbeiten an einer bordeigenen Batterie, basierend auf einer Plattform (1) für Arbeitsvorgänge an Batterien, nach einem der Ansprüche 1 bis 9, **dadurch gekennzeichnet, dass** die Plattform (1) für Arbeitsvorgänge an Batterien eine Batterielade- und -wechselstation umfasst.

11. System zum sicheren Arbeiten an einer bordeigenen Batterie, basierend auf einer Plattform (1) für Arbeitsvorgänge an Batterien, eine erste Einheit (U1) zum Verifizieren von Arbeitsvorgängen, eine zweite Einheit (U2) zum Verifizieren von Arbeitsvorgängen, eine dritte Einheit (U3) zum Verifizieren von Arbeitsvorgängen und eine vierte Einheit (U4) zum Verifizieren von Arbeitsvorgängen umfassend, wobei:
die erste Einheit (U1) zum Verifizieren von Arbeitsvorgängen für Folgendes konfiguriert ist: Verifizieren von Arbeitsvorgangsinformationen, die an die Plattform (1) für Arbeitsvorgänge an Batterien gesendet werden, nachdem der Betrieb der Plattform (1) für Arbeitsvorgänge an Batterien gestartet wurde, wobei die Arbeitsvorgangsinformationen Arbeitsvorgänge an einer bordeigenen Batterie betreffen und mindestens Informationen über einen aktuellen Arbeitsvorgang, der, basierend auf der Plattform für Arbeitsvorgänge an Batterien, an der bordeigenen Batterie vorzunehmen ist, und Zulassungsinformationen über einen Arbeiter umfassen, und Öffnen einer Einfahrt (6) der Plattform (1) für Arbeitsvorgänge an Batterien, wenn die Arbeitsvorgangsinformationen eine voreingestellte Bedingung erfüllen, um einem Fahrzeug (2), das eine bordeigene Batterie mitführt, an der ein Arbeitsvorgang vorzunehmen ist, das Einfahren zu gestatten, sonst Betreiben der vierten Einheit (U4),
die zweite Einheit (U2) zum Verifizieren von Arbeitsvorgängen für Folgendes konfiguriert ist: Erkennen, ob das Fahrzeug (2) sicher in einer voreingestellten Region (5) der Plattform (1) für Arbeitsvorgänge an Batterien geparkt ist, und Erkennen, ob sich der Arbeiter in der voreingestellten sicheren Region befindet, und wenn die zwei Erkennungen beide positiv ausfallen, Durchführen eines entsprechenden Arbeitsvorgangs an der bordeigenen Batterie gemäß den Informationen über den an der bordeigenen Batterie vorzunehmenden Arbeitsvorgang, sonst Betreiben der vierten Einheit (U4),
die dritte Einheit (U3) zum Verifizieren von Arbeitsvorgängen für Folgendes konfiguriert ist: nachdem der entsprechende Arbeitsvorgang an der bordeigenen Batterie abgeschlossen wurde, Erkennen, ob das Fahrzeug (2) bereits sicher von der Plattform (1) für Arbeitsvorgänge an Batterien gefahren ist, und Erkennen, ob sich der Arbeiter bereits in der voreingestellten sicheren Region befindet, und wenn die zwei Erkennungen in Schritt D beide positiv ausfallen, Schließen eines Ausgangs (7) der Plattform (1) für Arbeitsvorgänge an Batterien, sonst Betreiben der vierten Einheit (U4), und
die vierte Einheit (U4) für das Durchführen eines Anomalieverarbeitungsvorgangs konfiguriert ist.

12. System zum sicheren Arbeiten an einer bordeigenen Batterie, basierend auf einer Plattform (1) für Arbeitsvorgänge an Batterien, nach Anspruch 11, **dadurch gekennzeichnet, dass** das System zum sicheren Arbeiten an einer bordeigenen Batterie ferner eine Erkennungsvorrichtung umfasst, die mit der Plattform (1) für Arbeitsvorgänge an Batterien verbunden und dafür konfiguriert ist, die Position des Fahrzeugs (2) zu erkennen, um rückzumelden, ob das Fahrzeug (2) bereits sicher in einer voreingestellten Region (5) der Plattform (1) für Arbeitsvorgänge an Batterien geparkt wurde, ob das Fahrzeug (2) bereits sicher von der Plattform (1) für Arbeitsvorgänge an Batterien gefahren wurde und/oder ob sich der Arbeiter bereits in der voreingestellten sicheren Region befindet.

13. System zum sicheren Arbeiten an einer bordeigenen Batterie, basierend auf einer Plattform (1) für Arbeitsvorgänge an Batterien, nach Anspruch 11, **dadurch gekennzeichnet, dass** das System zum sicheren Arbeiten an einer bordeigenen Batterie ferner eine Informationsinteraktionseinheit umfasst, die dafür konfiguriert ist, Informationsinteraktionen zwischen dem Fahrzeug (2) und der Plattform (1) für Arbeitsvorgänge an Batterien durchzuführen, um rückzumelden, ob das Fahrzeug (2) bereits sicher in einer voreingestellten Region (5) der Plattform (1) für Arbeitsvorgänge an Batterien geparkt wurde und/oder ob das Fahrzeug (2) bereits sicher von der Plattform (1) für Arbeitsvorgänge an Batterien gefahren wurde.

14. System zum sicheren Arbeiten an einer bordeigenen Batterie, basierend auf einer Plattform (1) für Arbeitsvorgänge an Batterien, nach Anspruch 11, 12 oder 13, **dadurch gekennzeichnet, dass** das System zum sicheren Arbeiten an einer bordeigenen Batterie ferner eine manuelle Informationsinteraktionseinheit umfasst, die dafür konfiguriert ist, Informationsinteraktionen mit der Plattform (1) für Arbeitsvorgänge an Batterien durchzuführen, um rückzumelden, ob sich der Arbeiter bereits in der voreingestellten sicheren Region befindet.

## Revendications

1. Procédé d'exploitation sûre de batteries embarquées basé sur une plate-forme (1) d'exploitation de batteries, le procédé comportant les étapes consistant à :
A. démarrer le fonctionnement de la plate-forme (1) d'exploitation de batteries ;
B. effectuer une première validation d'opération dans une première unité (U1) de validation d'opération, ce qui comporte :
l'envoi d'informations d'opération à la plate-forme (1) d'exploitation de batteries, les informations d'opération se rapportant à une opération sur une batterie embarquée et comportant au moins des informations concernant une opération à réaliser sur la batterie embarquée et des informations d'habilitation concernant un opérateur ; et
si les informations d'opération satisfont une condition prédéfinie, l'ouverture d'une entrée (6) de la plate-forme (1) d'exploitation de batteries pour permettre à un véhicule (2), qui transporte une batterie embarquée devant faire l'objet d'une opération, d'entrer, si ce n'est pas le cas, l'exécution de l'étape E ;
C. effectuer une deuxième validation d'opération dans une deuxième unité (U2) de validation d'opération, ce qui comporte :
le fait de détecter si le véhicule (2) est stationné de manière sûre à l'intérieur d'une région prédéfinie (5) de la plate-forme (1) d'exploitation de batteries ; et
le fait de détecter si un opérateur se trouve à l'intérieur d'une région sûre prédéfinie ; et
si les deux détections à l'étape C sont toutes deux concluantes, la réalisation d'une opération correspondante sur la batterie embarquée selon les informations concernant l'opération à réaliser sur la batterie embarquée, si ce n'est pas le cas, l'exécution de l'étape E ;
D. effectuer une troisième validation d'opération dans une troisième unité (U3) de validation d'opération, ce qui comporte :
après que l'opération correspondante sur la batterie embarquée a été achevée, le fait de détecter si le véhicule (2) s'est déjà écarté de manière sûre de la plate-forme (1) d'exploitation de batteries ; et
le fait de détecter si l'opérateur se trouve à l'intérieur de la région sûre prédéfinie ; et
si les deux détections à l'étape D sont toutes deux concluantes, la fermeture d'une sortie (7) de la plate-forme (1) d'exploitation de batteries, si ce n'est pas le cas, l'exécution de l'étape E ; et
E. dans une quatrième unité (U4) de validation d'opération, effectuer une opération de traitement d'anomalie.

2. Procédé d'exploitation sûre de batteries embarquées basé sur une plate-forme (1) d'exploitation de batteries selon la revendication 1, **caractérisé en ce que** le fait que le véhicule (2) ait déjà été stationné ou non de manière sûre à l'intérieur d'une région prédéfinie (5) de la plate-forme (1) d'exploitation de batteries à l'étape C, et/ou le fait que le véhicule (2) se soit déjà écarté ou non de manière sûre de la plate-forme (1) d'exploitation de batteries à l'étape D sont confirmés en détectant la position du véhicule au moyen d'un appareil de détection relié à la plate-forme (1) d'exploitation de batteries.

3. Procédé d'exploitation sûre de batteries embarquées basé sur une plate-forme (1) d'exploitation de batteries selon la revendication 1, **caractérisé en ce que** le fait que le véhicule (2) ait déjà été stationné ou non de manière sûre à l'intérieur d'une région prédéfinie (5) de la plate-forme (1) d'exploitation de batteries à l'étape C, et/ou le fait que le véhicule (2) se soit déjà écarté ou non de manière sûre de la plate-forme (1) d'exploitation de batteries à l'étape D sont confirmés par l'intermédiaire d'une interaction informationnelle entre le véhicule (2) et la plate-forme (1) d'exploitation de batteries.

4. Procédé d'exploitation sûre de batteries embarquées basé sur une plate-forme (1) d'exploitation de batteries selon la revendication 1, **caractérisé en ce que** le fait que l'opérateur se soit déjà trouvé ou non à l'intérieur de la région sûre prédéfinie à l'étape C et/ou à l'étape D est confirmé en détectant la position de l'opérateur au moyen d'un appareil de détection relié à la plate-forme (1) d'exploitation de batteries.

5. Procédé d'exploitation sûre de batteries embarquées basé sur une plate-forme (1) d'exploitation de batteries selon la revendication 1, **caractérisé en ce que** le fait que l'opérateur se soit déjà trouvé ou non à l'intérieur de la région sûre prédéfinie à l'étape C et/ou à l'étape D est confirmé par l'intermédiaire d'une interaction informationnelle manuelle avec la plate-forme (1) d'exploitation de batteries.

6. Procédé d'exploitation sûre de batteries embarquées basé sur une plate-forme (1) d'exploitation de batteries selon la revendication 1, **caractérisé en ce que** la réalisation de l'opération correspondante sur la batterie embarquée à l'étape C comporte le remplacement de la batterie embarquée, la charge de la batterie embarquée et l'entretien de la batterie embarquée.

7. Procédé d'exploitation sûre de batteries embarquées basé sur une plate-forme (1) d'exploitation de batteries selon la revendication 1, **caractérisé en ce que** l'opération de traitement d'anomalie à l'étape E comporte :
l'émission d'une alarme ;
l'envoi d'informations d'anomalie à la plate-forme (1) d'exploitation de batteries, les informations d'anomalie comportant au moins une partie des informations d'opération, l'heure de l'anomalie et le lieu de l'anomalie ; et/ou
le redémarrage du fonctionnement de la plate-forme (1) d'exploitation de batteries, ou l'arrêt du fonctionnement de la plate-forme (1) d'exploitation de batteries.

8. Procédé d'exploitation sûre de batteries embarquées basé sur une plate-forme (1) d'exploitation de batteries selon la revendication 1, **caractérisé en ce qu'**au moins une partie des informations d'opération est envoyée à la plate-forme (1) d'exploitation de batteries par l'intermédiaire d'une interaction entre le véhicule (2) et la plate-forme (1) d'exploitation de batteries.

9. Procédé d'exploitation sûre de batteries embarquées basé sur une plate-forme (1) d'exploitation de batteries selon la revendication 1, **caractérisé en ce que** la plate-forme (1) d'exploitation de batteries est reliée à un système distant, qui est utilisé pour vérifier si les informations d'opération satisfont la condition prédéfinie.

10. Procédé d'exploitation sûre de batteries embarquées basé sur une plate-forme (1) d'exploitation de batteries selon l'une quelconque des revendications 1 à 9, **caractérisé en ce que** la plate-forme (1) d'exploitation de batteries comporte une station de charge et de substitution de batteries.

11. Système d'exploitation sûre de batteries embarquées basé sur une plate-forme (1) d'exploitation de batteries, **caractérisé en ce qu'**il comporte une première unité (U1) de validation d'opération, une deuxième unité (U2) de validation d'opération, une troisième unité (U3) de validation d'opération et une quatrième unité (U4),
la première unité (U1) de validation d'opération étant configurée pour : après que le fonctionnement de la plate-forme (1) d'exploitation de batteries a été démarré, valider des informations d'opération envoyées à la plate-forme (1) d'exploitation de batteries, les informations d'opération se rapportant à des opérations sur une batterie embarquée et comportant au moins des informations concernant une opération actuelle à réaliser sur la batterie embarquée sur la base de la plate-forme d'exploitation de batteries et des informations d'habilitation concernant un opérateur ; et lorsque les informations d'opération satisfont une condition prédéfinie, ouvrir une entrée (6) de la plate-forme (1) d'exploitation de batteries pour permettre à un véhicule (2), qui transporte une batterie embarquée devant faire l'objet d'une opération, d'entrer, si ce n'est pas le cas, faire fonctionner la quatrième unité (U4) ;
la deuxième unité (U2) de validation d'opération étant configurée pour : détecter si le véhicule (2) est stationné de manière sûre à l'intérieur d'une région prédéfinie (5) de la plate-forme (1) d'exploitation de batteries ; et détecter si l'opérateur se trouve à l'intérieur d'une région sûre prédéfinie ; et si les deux détections sont toutes deux concluantes, effectuer une opération correspondante sur la batterie embarquée selon les informations concernant l'opération à réaliser sur la batterie embarquée, si ce n'est pas le cas, faire fonctionner la quatrième unité (U4) ;
la troisième unité (U3) de validation d'opération étant configurée pour : après que l'opération correspondante sur la batterie embarquée a été achevée, détecter si le véhicule (2) s'est déjà écarté de manière sûre de la plate-forme (1) d'exploitation de batteries ; et détecter si l'opérateur se trouvait déjà à l'intérieur de la région sûre prédéfinie ; et si les deux détections sont toutes deux concluantes, fermer une sortie (7) de la plate-forme (1) d'exploitation de batteries, si ce n'est pas le cas, faire fonctionner la quatrième unité (U4) ; et
la quatrième unité (U4) étant configurée pour effectuer une opération de traitement d'anomalie.

12. Système d'exploitation sûre de batteries embarquées basé sur une plate-forme (1) d'exploitation de batteries selon la revendication 11, **caractérisé en ce que** le système d'exploitation sûre de batteries embarquées comporte en outre un appareil de détection relié à la plate-forme (1) d'exploitation de batteries, qui est configuré pour détecter la position du véhicule (2) afin de confirmer si le véhicule (2) a déjà été stationné de manière sûre à l'intérieur d'une région prédéfinie (5) de la plate-forme (1) d'exploitation de batteries, si le véhicule (2) s'est déjà écarté de manière sûre de la plate-forme (1) d'exploitation de batteries, et/ou si l'opérateur se trouvait déjà à l'intérieur de la région sûre prédéfinie.

13. Système d'exploitation sûre de batteries embarquées basé sur une plate-forme (1) d'exploitation de batteries selon la revendication 11, **caractérisé en ce que** le système d'exploitation sûre de batteries embarquées comporte en outre une unité d'interaction informationnelle, qui est configurée pour réaliser une interaction informationnelle entre le véhicule (2) et la plate-forme (1) d'exploitation de batteries afin de confirmer si le véhicule (2) a déjà été stationné de manière sûre à l'intérieur d'une région prédéfinie (5) de la plate-forme (1) d'exploitation de batteries, et/ou si le véhicule (2) s'est déjà écarté de manière sûre de la plate-forme (1) d'exploitation de batteries.

14. Système d'exploitation sûre de batteries embarquées basé sur une plate-forme (1) d'exploitation de batteries selon la revendication 11, 12 ou 13, **caractérisé en ce que** le système d'exploitation sûre de batteries embarquées comporte en outre une unité d'interaction informationnelle manuelle configurée pour réaliser une interaction informationnelle avec la plate-forme (1) d'exploitation de batteries afin de confirmer si l'opérateur se trouvait déjà à l'intérieur de la région sûre prédéfinie.
